# EUROPÄISCHE PATENTANMELDUNG

(11) **EP 2 703 106 A1**
(43) Veröffentlichungstag der Anmeldung: **05.03.2014**
(21) Anmeldenummer: 13004216.1
(22) Anmeldetag: 27.08.2013
(51) Int. Cl.: B23B 51/10, B27G 15/00, C22C 38/18

(54) **Bohrwerkzeug**

(30) Priorität: 27.08.2012 AT 9292012
(71) Anmelder: Sihga Handels GmbH, 4694 Ohlsdorf (AT)
(72) Erfinder: Gaisbauer, Günther, 4912 Neuhofen (AT)

(57) **Zusammenfassung**

Die Erfindung betrifft ein Bohrwerkzeug für das Bohren von Schraubendurchgangsbohrungen in Holzteile, welche dazu bestimmt sind der Witterung ausgesetzt zu werden, wobei das Bohrwerkzeug aus einem Bohrer (1) und einem daran angebrachten, gegenüber dem Bohrer (1) um die Bohrerachse drehbar gelagert gehaltenen Anschlagteil (2) für das Begrenzen der Bohrtiefe besteht. Der Bohrer (1) besteht aus einem nichtrostenden Stahl.

## Beschreibung

Die Erfindung betrifft ein Bohrwerkzeug für das Bohren von Löchern in Holz.

Die DE 470508 C zeigt schon 1929 einen Bohrer für die Holzbearbeitung welcher aus einem Schaft und einem Bohrmesser besteht. Der Schaft ist ein länglicher Kreiszylinder, welcher von einer Stirnseite her über einen erheblichen Teil seiner Länge durch einen parallel zu seiner Achse verlaufenden Längsschnitt geteilt ist. In den durch den Längsschnitt gebildeten Schlitz ist das Bohrmesser eingesetzt, welches radial über den Schaft vorsteht. Schaft und Bohrmesser bestehen aus verschiedenen Materialien. Der Schaft bestehe aus "gewöhnlichem Material" und das Bohrmesser aus "Edelstahl". Der Zusammenhang lässt vermuten, dass mit dem Wort "Edelstahl", - dessen Bedeutung an sich "legierter oder unlegierter Stahl mit besonderem Reinheitsgrad" ist, - Werkzeugstahl gemeint ist, also härtbarer Stahl, welcher oberflächengehärtet oder durchgehärtet ist.

Die CH 177984 A zeigt 1934 ein Bohrwerkzeug, welches einen zentralen Bohrer und zwei koaxial darum herum angeordnete hülsenartige Teile aufweist. Die innere der beiden Hülsen ist an ihrer der Bohrerspitze zugewandten Stirnseite als Senkkopf für das Ansenken der vom Bohrer gebohrten Bohrung ausgebildet. Die äußere der beiden Hülsen ist an ihrer der Bohrerspitze zugewandten Stirnseite als Kreisringfläche mit relativ großem Durchmesser ausgebildet; sie dient als Anschlagfläche für das Begrenzen der Bohrlochtiefe.

Durch die EP 0171 830 A1, veröffentlicht 1986, wird ein Bohrwerkzeug für das Bohren von Löchern in Holz gezeigt. Das Bohrwerkzeug besteht im Wesentlichen aus einem üblichen Spiralbohrer aus Stahl und einer topfartigen Hülse aus einem Kunststoffmaterial. Spiralbohrer und topfartige Hülse sind koaxial zueinander angeordnet, wobei der Innendurchmesser der Hülse größer als der Bohrerdurchmesser ist und wobei die Öffnungsseite der topfartigen Hülse zur Bohrerspitze hin ausgerichtet, gegenüber dieser aber etwas zurückversetzt ist. Die topfartige Hülse ist gegenüber dem Schaft des Spiralbohrers drehbar. Ihre zur Bohrerspitze hin ausgerichtete kreisringförmige Stirnfläche bildet eine Anschlagfläche für das Begrenzen der Bohrlochtiefe. Indem die topfartige Hülse gegenüber dem Bohrer drehbar ist, bleibt sie stehen sobald sie mit ihrer Stirnfläche an dem Holz anliegt, in welches gebohrt wird. Gegenüber einem immer mitdrehenden Anschlagteil ist das für die Holzoberfläche sehr viel schonender. Gegen axiales Verschieben am Bohrer ist die topfartige Hülse durch zwei Sicherungsringe ("Seegerringe") gehalten, welche in Nuten am Bohrer verankert sind und an jeweils einer Seite des Bodens der topfartigen Hülse anliegen. Die EP 1 757 393 A2 zeigt ein Werkzeug für das Vorbohren von Einschraublöchern beispielsweise für Senkkopfschrauben in Holz. Das Werkzeug hat eine Bohrer und einen drehbar daran gelagerten, topfartig aussehenden Anschlagteil für die Begrenzung der Bohrtiefe.

In der DE 102 51 413 B3 wird für zahnärztliche Werkzeuge die Verwendung eines korrosionsbeständigen, martensitisch aushärtenden Stahls als Material für maschinell zu Rotation angetriebenen Bohrer vorgeschlagen.

Vor allem aufmerksamen Handwerkern aber auch Bauherren ist aufgefallen, dass nach etwas Zeit nach der Montage von Terrassendielen vor allem im Nahbereich der Köpfe der Befestigungsschrauben, an der Oberfläche der Terrassendielen rostartige Flecken sichtbar werden. Diese Flecken scheinen auch durch sorgfältige Arbeitsweise mit sauberen Werkzeugen und Arbeitsgeräten nicht vermeidbar zu sein.

Die der Erfindung zu Grunde liegende Aufgabe besteht darin, das Auftreten der im letzten Absatz beschriebenen rostartigen Flecken an durch Schrauben befestigten Terrassendielen zu vermeiden.

Für das Lösen der Aufgabe wird vorgeschlagen ein Bohrwerkzeug zu verwenden, welches nach der in der EP 0171 830 A1 beschriebenen Bauweise aus einem Bohrer und einer koaxial darum herum angeordneten, gegenüber dem Bohrer drehbaren Anschlagteil für das Begrenzen der Bohrlochtiefe besteht. Als erfindungsgemäße Verbesserung wird vorgeschlagen, als Material für den Bohrer nichtrostenden Stahl zu verwenden.

Dem erfindungsgemäßen Vorschlag liegt die durch den Erfinder erarbeitete, überraschende Erkenntnis zu Grunde, dass die besagten rostartigen Flecken dadurch entstanden, dass beim Bohren von Schraubendurchgangslöchern geringe Mengen feinen Abriebmaterials vom Bohrer, also Werkzeugstahl, an die Oberflächen der Terrassendielen gelangte, in weiterer Folge zufolge des Witterungseinflusses verrostete und gemeinsam mit Wasser die besagten Flecken verursachte.

Vor der erfindungsgemäßen Erkenntnis war man - laut Reklamationsprotokollen - bei weitem überwiegend der Meinung, dass störende Flecken an Terrassendielen von den Befestigungsschrauben verursacht werden indem von diesen Material wegdiffundiere und im Holz Flecken verursache. Die wenigen Menschen die dies zumindest als alleinige Ursache bezweifelten, vermuteten dass Abrieb von jenem Antriebswerkzeug, welches für das Eindrehen der Schrauben dient, Flecken verursacht. Man stellte sich dabei vor, dass beim Eindrehend der Schrauben an der Kontaktfläche zwischen Werkzeug und Schraubenkopf das Werkzeug abgenutzt wird und dabei Partikel aus der Werkzeugoberfläche herausgebrochen werden. Diese Partikel fallen zum Teil auf das umliegende Holz; im Lauf der Zeit reagieren sie mit Teilsubstanzen des Holzes und verursachen damit Flecken. Erst der Erfinder zur vorliegenden Anmeldung erkannte, dass ein erheblicher Teil der störenden Flecken weder durch Material von den Schrauben noch durch Material vom Schraubendreher verursacht sind, sondern von Material, welches als unsichtbar feiner Abrieb schon von jenem Bohrer stammt, der für das Vorbohren der Schraubenlöcher verwendet wurde.

Indem erfindungsgemäß als Material für den Bohrer nichtrostender Stahl verwendet wird, kann allfällig sich vom Bohrer lösender Abrieb keine Rostflecke verursachen.

Rostfreie Stähle sind im Allgemeinen nicht so hart wie Werkzeugstähle und werden deshalb im Allgemeinen nicht als Material für spanabhebende Werkzeuge verwendet. Für den vorliegenden Fall ist dieser Nachteil nicht von großer Bedeutung, da die Härte durchaus ausreicht, sofern mit dem Bohrer nur Holz gebohrt wird.

Neben dem Nichtrosten ist ein zusätzlicher Vorteil von rostfreien Stählen gegenüber Werkzeugstählen, dass rostfreie Stähle im Allgemeinen zäher, also im plastischen Bereich weiter verformbar sind als Werkzeugstähle. Damit wird also auch erreicht, dass sich überhaupt weniger oder gar kein Material des Bohrers als Abrieb von diesem ablöst.

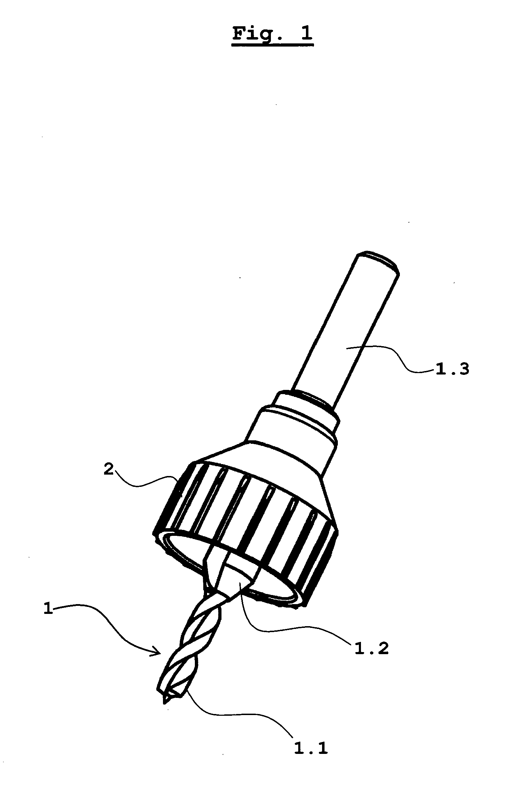

- Fig. 1:: zeigt ein beispielhaftes erfindungsgemäßes Bohrwerkzeug in einer Schrägrissansicht.

Das in Fig. 1 dargestellte erfindungsgemäße Bohrwerkzeug besteht aus einem Bohrer 1 aus nichtrostendem Stahl und einer topfartigen Hülse 2, welche gegenüber dem Bohrer 1 um die Achse des Bohrers drehbar ist und bevorzugt aus einem Kunststoffmaterial besteht.

Der Bohrer 1 weist einen Spitze, einen daran anschließenden Spiralbereich 1.1 einen Senkbereich 1.2 und einen zylindrischen Schaft 1.3 auf.

Am Senkbereich 1.2 verbreitert sich der Durchmesser des Bohrers kegelstumpfartig vom Durchmesser des Spiralbereichs 1.1 auf den Durchmesser des Schaftes 1.3. Der Senkbereich 1.2 dient dazu die durch den Bohrer zu bildende Bohrung an ihrem Öffnungsbereich mit einer Senkung zu versehen, sie also im Bereich ihrer Öffnung gegenüber tiefer liegenden Längsbereichen kegelstumpfartig zu erweitern. Aus diesem Grund liegt der Übergang zwischen dem Senkbereich 1.2 und dem Schaftbereich 1.3 des Bohrers 1 an jener Längskoordinate des Bohrers 1, an welcher auch die der Bohrspitze zugewandte kreisringförmige Stirnfläche der topfartigen Hülse 2 liegt.

Indem das Bohrwerkzeug nicht einfach ein monolithischer Bohrer 1 ist, sondern zweiteilig ausgebildet ist, nämlich als Bohrer 1 und einem daran angeordneten drehbaren Anschlagteil zur Begrenzung der Bohrtiefe, ist die Gefahr vermindert, dass das Bohrwerkzeug mit welchem bestimmungsgemäß nur Hölzer gebohrt werden sollen, für Bohrzwecke eingesetzt wird für welche die Härte des Bohrermaterials nicht ausreichen würde.

Als beispielhafte konkrete Materialien für den Bohrer sind Stähle entsprechend folgender Normbezeichung sehr gut geeignet:
Martensitische Vergütungsstähle, rostfrei 1.40xx nach EN 10088. ("xx" steht für beliebige an diesen Stellen angeordnete Ziffern.)

Bohrer aus dem Vergütungsstahl mit der Nummer 1.4021 aus besagter Norm sind einfach und kostengünstig erhältlich. Es wurden vielerlei Versuche damit durchgeführt. Die der Erfindung zu Grunde liegende Aufgabenstellung wurde damit bestens erfüllt.

Das erfindungsgemäße Bohrwerkzeug ist allgemein an solchen Holzbauteilen besonders nutzbringend einsetzbar, welche in ihrem Gebrauch der Witterung ausgesetzt sind.

## Patentansprüche

1. Bohrwerkzeug für das Bohren von Schraubendurchgangsbohrungen in Holzteile, welche dazu bestimmt sind der Witterung ausgesetzt zu werden, wobei das Bohrwerkzeug aus einem Bohrer (1) und einem daran angebrachten, gegenüber dem Bohrer (1) um die Bohrerachse drehbar gelagert gehaltenen Anschlagteil (2) für das Begrenzen der Bohrtiefe besteht,
**dadurch gekennzeichnet, dass**
der Bohrer (1) aus einem nichtrostenden Stahl besteht.

2. Bohrwerkzeug nach Anspruch 1, **dadurch gekennzeichnet, dass** das Material des Bohrers ein martensitischer Vergütungsstahl, rostfrei 1.40xx nach EN 10088 ist.

3. Bohrwerkzeug nach Anspruch 3, **dadurch gekennzeichnet, dass** das Material des Bohrers ein martensitischer Vergütungsstahl, rostfrei 1.4021 nach EN 10088 ist.

4. Bohrwerkzeug nach einem der Ansprüche 1 bis 3, **dadurch gekennzeichnet, dass** es dazu dient, Löcher in Terrassendielen zu bohren.
